# EUROPÄISCHE PATENTSCHRIFT

(11) **EP 2 501 594 B1**
(45) Veröffentlichungstag und Bekanntmachung des Hinweises auf die Patenterteilung: **31.08.2016**
(21) Anmeldenummer: 10779790.4
(22) Anmeldetag: 16.11.2010
(51) Int. Cl.: B60T 8/88, B60T 17/22, B60T 8/36, B60T 8/48

(54) **BETRIEBSBRESMSEINRICHTUNG EINES FAHRZEUGS MIT TESTLAUF FÜR VENTILE**
MAIN BRAKE DEVICE OF A VEHICLE HAVING TEST RUN FOR VALVES
SYSTÈME DE FREINAGE DE SERVICE D'UN VÉHICULE À CYCLE D'ESSAI POUR SOUPAPES

(30) Priorität: 18.11.2009 DE 102009053815
(43) Veröffentlichungstag der Anmeldung: 26.09.2012
(60) Teilanmeldung: 15000905.8
(73) Patentinhaber: KNORR-BREMSE Systeme für Nutzfahrzeuge GmbH, 80809 München (DE)
(72) Erfinder: WIEDER, Gerhard, 74354 Besigheim (DE); MUSTAPHA, Adnan, 75433 Maulbronn (DE); ZIEGLER, Andreas, 71287 Weissach (DE); SCHWAB, Frank, 75249 Kieselbronn (DE); JUNDT, Oliver, 74394 Hessigheim (DE); HOLOBRADI, Peter, H-2040 Budaörs (HU)
(74) Vertreter: Schönmann, Kurt
(86) Internationale Anmeldenummer: PCT/EP2010/067558
(87) Internationale Veröffentlichungsnummer: WO 2011/061179

(56) Entgegenhaltungen:
- EP-A1- 0 477 519
- EP-A2- 0 485 367
- EP-A2- 0 604 864
- EP-A2- 0 933 275
- DE-A1- 4 106 336
- DE-A1- 19 639 005
- DE-A1-102006 014 269
- US-A- 3 948 568

## Beschreibung

Die Erfindung geht aus von einer Betriebsbremseinrichtung eines Fahrzeugs gemäß dem Oberbegriff von Anspruch 1.

Eine Betriebsbremseinrichtung eines Fahrzeugs mit wenigstens einem von einem elektronischen Steuergerät zum schlupfgeregelten Bremsen gesteuerten, wenigstens ein Einlassventil und ein Auslassventil aufweisenden und einem druckmittelbetätigten Bremszylinder vorgeordneten ABS-Drucksteuerventil ist beispielsweise aus der DE 101 55 952 A1 bekannt. Bei solchen Betriebsbremseinrichtungen ergibt sich das Problem, dass zuverlässig überprüft werden sollte, ob die ABS-Drucksteuerventile ordnungsgemäß funktionieren.

In der US-A-3 948 568 wird eine Anordnung zur Selbstüberprüfung eines Bremskreises mit ABS beschrieben, bei dem die Wirksamkeit der Pumpe, die Dichtigkeit der Ventile und deren rechtzeitiges Ansprechen überprüft werden. Dies geschieht dadurch, dass für jedes ABS-Drucksteuerventil in einer Druckleitung zwischen dem ABS-Drucksteuerventil und den zugeordneten Radbremszylindern jeweils ein Drucksensor angeordnet und der von diesem Drucksensor detektierte Druck im Rahmen eines Testlauf gemessen und mit vorgegebenen Schwellwerten verglichen wird. In ähnlicher Weise wird gemäß DE 10 2006 014 269 A1 eine hydraulische Bremseinrichtung eines Fahrzeugs beschrieben, bei der in einer Druckleitung zwischen einem ABS-Drucksteuerventil und einem Radbremszylinder ein Drucksensor angeordnet ist, wobei im Rahmen eines Tests der von diesem Drucksensor detektierte Druck im Rahmen eines Testlauf gemessen und mit erwarteten Werten verglichen wird. Nachteilig hierbei ist jedoch, dass für jedes ABS-Drucksteuerventil ein eigener Drucksensor vorgesehen werden muss.

Gemäß einer weiteren Ausführungsform der US-A-3 948 568 wird in einer Druckleitung zwischen einem den ABS-Drucksteuerventilen vorgeordneten Ventil und den ABS-Druckssteuerventilen ein Drucksensor angeordnet der von diesem Drucksensor detektierte Druck im Rahmen eines Testlauf gemessen und mit vorgegebenen Schwellwerten verglichen. Nachteilig hierbei ist jedoch, dass Fehler, die aus Abweichungen des gemessen Drucks von einem erwarteten Druckwert geschlossen werden, nicht eindeutig dem vorgeordneten Ventil oder den ABS-Druckssteuerventilen zugeordnet werden können.

Gemäß DE 196 39 005 A1 wird ein Verfahren zur Überprüfung einer hydraulischen Bremsanlage vorgeschlagen, bei dem im Rahmen eines automatischen Prüfprogramms ABS-Ventile zum Druckaufbau, Druckhalten und Druckabbau betätigt werden und an einem Rad des Fahrzeugs jeweils das Bremsmoment bzw. die Radverzögerung gemessen wird.

Bei einer Betriebsbremseinrichtung gemäß EP 0 933 275 A2 werden im Rahmen einer Variante eines Verfahrens zur Überprüfung der Bremseinrichtung das Einlassventil und das Auslassventil eines ABS-Drucksteuerventils in Sperrstellung gebracht und ein vorgeordnetes Ventil in Durchlassstellung, um die Druckmittelleitung zwischen dem vorgeordneten Ventil und den ABS-Drucksteuerventilen unter Druck zu setzen. Bei Geradeausfahrt des Fahrzeugs und bei konstanter Fahrgeschwindigkeit werden dann Raddrehzahlgrößen und Radschlupfgrößen ermittelt und mit Schwellwerten verglichen. Wird dabei festgestellt, dass eine der Radschlupfgrößen größer als der Schwellwert ist, wird auf ein defekt offenes Einlassventil der ABS-Drucksteuerventile geschlossen. Gemäß einer weiteren Variante des Verfahrens wird für jeweils ein Rad nacheinander das Einlassventil in seine Durchlassstellung gebracht, während die Einlassventile der restlichen Räder in ihrer Sperrstellung sind. Zugleich wird das vorgeordnete Ventil geöffnet. Dann wird überprüft, ob sich ein signifikanter Drehzahlunterschied des gebremsten Fahrzeugrads zu den ungebremsten Fahrzeugrädern ergibt. Dadurch können zwar die Funktionen der Einlass- bzw. Auslassventile überprüft werden, nicht jedoch, ob das Einlassventil bzw. das Auslassventil des ABS-Drucksteuerventils an das elektronische Steuergerät vertauscht angeschlossen sind.

Gemäß der gattungsbildenden DE 41 06 336 A1 wird bei einer hydraulischen Bremsanlage mit ABS/ASR-Regelung im Rahmen eines Prüfvorgangs, um eine mögliche Fehlfunktion von Ventilen, zu welchen auch ein Auslassventil einer Ventilanordnung zum Druckaufbau, Druckhalten und Druckabbau zählt, das Auslassventil in Sperrstellung geschaltet und die dem Auslassventil vorgeordnete Druckmittelleitung druckbeaufschlagt, wobei falls ein von einem in der Druckmittelleitung erfasster Druck nicht konstant bleibt, auf eine Leckage an dem Auslassventil bzw. den weiteren Ventilen der Ventilanordnung geschlossen.

Der vorliegenden Erfindung liegt demgegenüber die Aufgabe zugrunde, eine Betriebsbremseinrichtung der oben erwähnten Art derart weiter zu entwickeln, dass weitere Fehlfunktionen auf einfache Weise detektierbar sind.

Diese Aufgabe wird erfindungsgemäß durch die Merkmale von Anspruch 1 gelöst.

### Offenbarung der Erfindung

Die Erfindung basiert darauf, dass in der Druckmittelleitung zwischen dem ABS-Drucksteuerventil und der Ventileinrichtung wenigstens ein Drucksensor zur Messung des Drucks in der Druckmittelleitung angeordnet ist, wobei das elektronische Steuergerät ausgebildet ist, dass es im Rahmen wenigstens eines Testlaufs das Einlassventil und/oder das Auslassventil des ABS-Drucksteuerventils und die Ventileinrichtung steuert, um in der Druckmittelleitung einen von dem wenigstens einen Drucksensor erfassbaren Druck zu erzeugen, durch Auswertung der von dem Drucksensor gelieferten Signale den zeitlichen Druckverlauf des in die Druckmittelleitung eingesteuerten Drucks erfasst und mit einem erwarteten gespeicherten Druckverlauf vergleicht, und bei einer nach vorbestimmten Kriterien vorliegenden Abweichung des erfassten Druckverlaufs von dem erwarteten gespeicherten Druckverlauf ein Fehlersignal erzeugt.

Ein solcher Testlauf kann beispielsweise außerhalb einer regulären Fahrbetriebs im Stillstand des Fahrzeugs bei jedem Fahrzeugstart durchgeführt werden.

Durch diese Maßnahmen lassen sich Fehler in den ABS-Drucksteuerventilen bzw. in der Ventileinrichtung, welche beispielsweise die ASR-Funktionen durchführt, auf einfache Weise detektieren, da hierzu als Hardware lediglich der Drucksensor sowie entsprechende Steuerroutinen im elektronischen Steuergerät notwendig sind.

Da die Druckmittelleitung, in welcher der Druck durch den Drucksensor gemessen wird stets ein bestimmtes ABS-Drucksteuerventil druckversorgt, können detektierte Fehler auf einfache Weise dem jeweiligen ABS-Drucksteuerventil zugeordnet werden.

Erfindungsgemäß ist vorgesehen, dass das elektronische Steuergerät im Rahmen eines ersten Testlaufs
- das Einlassventil und das Auslassventil des ABS-Drucksteuerventils in Sperrstellung steuert, und dann
- die Ventileinrichtung steuert, um den vom Druckmittelvorrat abgeleiteten Druck in die Druckmittelleitung einzusteuern, und dann
- durch Auswertung der von dem Drucksensor gelieferten Signale den zeitlichen Druckverlauf des in die Druckmittelleitung eingesteuerten Drucks erfasst und mit einem erwarteten gespeicherten Druckverlauf vergleicht, und dann
- bei einer nach vorbestimmten Kriterien vorliegenden Abweichung des erfassten Druckverlaufs von dem erwarteten gespeicherten Druckverlauf ein Fehlersignal erzeugt.

Demnach wird die Druckmittelleitung durch die Ventileinrichtung druckbeaufschlagt.

Bei intaktem Einlassventil des ABS-Drucksteuerventils ergibt sich dann ein schneller Anstieg des Druckverlaufs über der Zeit, weil lediglich das relativ kleine Volumen der Druckmittelleitung druckbeaufschlagt wird. Ist das Einlassventil dagegen defekt, weil es beispielsweise nicht vollständig schließt, so ergibt sich ein langsamerer Anstieg des Druckverlaufs über der Zeit, da dann zusätzlich das Leitungsvolumen der das ABS-Drucksteuerventil mit dem Bremszylinder verbindenden Druckmittelleitung sowie ein Arbeitsraum des Bremszylinders mit Druckmittel befüllt wird. Durch einen Vergleich des gespeicherten zeitlichen Druckmittelverlaufs mit dem tatsächlichen Druckmittelverlauf beispielsweise anhand des jeweiligen Druckgradienten ist daher beim Einlassventil eine Fehlerdetektion möglich.

Durch die in den Unteransprüchen aufgeführten Maßnahmen sind vorteilhafte Weiterbildungen und Verbesserungen der in den unabhängigen Ansprüchen angegebenen Erfindung möglich.

Gemäß einer Weiterbildung kann vorgesehen sein, dass das elektronische Steuergerät nach der Steuerung des Einlassventils und des Auslassventils des ABS-Drucksteuerventils in Sperrstellung und im Rahmen der Steuerung der Ventileinrichtung, um den vom Druckmittelvorrat abgeleiteten Druck in die Druckmittelleitung einzusteuern zusätzlich das Auslassventil des ABS-Drucksteuerventils in Öffnungsstellung steuert und dann durch Auswertung der von dem Drucksensor gelieferten Signale den zeitlichen Druckverlauf des in die Druckmittelleitung eingesteuerten Drucks erfasst und mit einem erwarteten gespeicherten Druckverlauf vergleicht, und dann bei einer nach vorbestimmten Kriterien vorliegenden Abweichung des erfassten Druckverlaufs von dem erwarteten gespeicherten Druckverlauf ein Fehlersignal erzeugt.

Das elektronische Steuergerät ist daher bevorzugt ausgebildet, dass es bei Steuerung des Einlassventils in Schließstellung und bei Einsteuern von Druck in die Druckmittelleitung durch die Ventileinrichtung das Auslassventil des ABS-Drucksteuerventils in Öffnungsstellung steuert.

Dann wird im Falle eines nicht vollständig schließenden Einlassventils das in die Druckmittelleitung eingesteuerte Druckmittel teilweise in die Atmosphäre abgelassen, wobei sich ein gegenüber dem gespeicherten Referenzdruckverlauf messbar verzögerter Druckaufbau in der Druckmittelleitung ergibt, welcher von dem Drucksensor messbar ist. Außerdem ist die Entlüftung deutlich hörbar, so dass das diesbezügliche Entlüftungsgeräusch auf ein defektes Einlassventil eines ABS-Drucksteuerventils hinweist.

Mit den vorstehend beschriebenen Maßnahmen kann daher die Funktionstüchtigkeit eines Einlassventils eines ABS-Drucksteuerventils überprüft werden.

Eine zusätzliche Weiterbildung kann vorsehen, dass das elektronische Steuergerät nach der Steuerung des Einlassventils und des Auslassventils des ABS-Drucksteuerventils in Sperrstellung und im Rahmen der Steuerung der Ventileinrichtung, um den vom Druckmittelvorrat abgeleiteten Druck in die Druckmittelleitung einzusteuern zusätzlich das Einlassventil und das Auslassventil des ABS-Drucksteuerventils in Öffnungsstellung steuert und dann durch Auswertung der von dem Drucksensor gelieferten Signale den zeitlichen Druckverlauf des in die Druckmittelleitung eingesteuerten Drucks erfasst und mit einem erwarteten gespeicherten Druckverlauf vergleicht, und dann bei einer nach vorbestimmten Kriterien vorliegenden Abweichung des erfassten Druckverlaufs von dem erwarteten gespeicherten Druckverlauf ein Fehlersignal erzeugt.

Das elektronische Steuergerät ist daher bevorzugt ausgebildet, dass es bei Steuerung des Auslassventils in Öffnungsstellung zusätzlich das Einlassventil des ABS-Drucksteuerventils in Öffnungsstellung steuert. Dann wird der über die Ventileinrichtung in die Druckmittelleitung eingesteuerte Druck durch das geöffnete Einlassventil in den Bremszylinder eingelassen, wobei ein nicht vollständig öffnendes Auslassventil den Druck im Bremszylinder nicht kurzzeitig senken kann, was auf einen Fehler des Auslassventils hindeutet, so dass der gemessene Druckverlauf von dem erwarteten Druckverlauf abweicht und vom elektronischen Steuergerät ein Fehlersignal erzeugt wird.

Wenn bei gemeinsamem Öffnen der Ventileinrichtung und des Auslassventils und bei gleichzeitig geöffnetem Einlassventil der Druckverlauf überwacht wird, kann bei einem fehlerhaften, d.h. bei einem nicht vollständig öffnenden Auslassventil ein schnellerer Druckaufbau festgestellt werden als bei einem intakten Auslassventil.

Mit den vorstehend beschriebenen Maßnahmen kann daher auch die Funktionstüchtigkeit eines Auslassventils eines ABS-Drucksteuerventils überprüft werden.

Besonders bevorzugt steuert das elektronische Steuergerät die Ventileinrichtung, dass diese den vom Druckmittelvorrat abgeleiteten Druck in die Druckmittelleitung für einen vorbestimmten Zeitraum einsteuert, insbesondere für einen sehr kurzen Zeitraum, beispielsweise für 200 ms. Ein solcher Druckimpuls kann vom Drucksensor erfasst werden, insbesondere hinsichtlich der maximalen Druckhöhe und des Druckabfalls nach dem Impuls als charakteristische Kenngrößen. Abweichungen von diesen Kenngrößen deuten dann auf Ventilfehler hin.

Gemäß einer weiteren Maßnahme beinhaltet die Ventileinrichtung ein ASR-Ventil zum schlupfgeregelten Beschleunigen des Fahrzeugs, welches einerseits durch das elektronische Steuergerät elektrisch steuerbar und andererseits von einem durch ein fahrerbetätigtes Betriebsbremsventil ausgesteuerten Steuerdruck druckmittelsteuerbar ist, derart, dass das ASR-Ventil bei Aussteuerung des Steuerdrucks durch das Betriebsbremsventil diesen Steuerdruck in die Druckmittelleitung einsteuert und bei einer Ansteuerung durch das elektronische Steuergerät im Rahmen einer ASR-Funktion den vom Druckmittelvorrat abgeleiteten Druck in die Druckmittelleitung einsteuert.

Dann kann gemäß einer alternativen Maßnahme vorgesehen sein, dass das elektronische Steuergerät ausgebildet ist, dass es im Rahmen eines zweiten Testlaufs das Einlassventil und das Auslassventil des wenigstens einen ABS-Drucksteuerventils zunächst in Sperrstellung steuert, nach einer Betätigung des Betriebsbremsventils durch den Fahrer die Ventileinrichtung in eine Durchlassstellung steuert, bis der vom Drucksensor in dem der Ventileinrichtung und dem ABS-Drucksteuerventil zwischengeordneten Abschnitt der Druckmittelleitung erfasste Druck konstant ist, und dann das Auslassventil des wenigstens einen ABS-Drucksteuerventils in Öffnungsstellung schaltet. Dadurch wird der Bremszylinder druckentlastet. Falls das Einlassventil einen Defekt aufweist, dann strömt Druckmittel aus der Druckmittelleitung in den Bremszylinder nach, wodurch ein nicht erwarteter Druckabfall in der Druckmittelleitung durch den Drucksensor detektierbar ist.

Alternativ kann die Ventileinrichtung ein Druckregelmodul, beispielsweise ein 1-Kanal-Druckregelmodul zur Erzeugung eines geregelten Bremsdrucks in dem wenigstens einen Bremszylinder beinhalten, wobei dies den Vorteil hat, dass der Drucksensor bereits in dem Druckregelmodul integriert ist.

Besonders bevorzugt wird das Druckmittel durch Druckluft gebildet und die Betriebsbremseinrichtung ist einem Nutzfahrzeug zugeordnet. Die Erfindung ist jedoch nicht auf pneumatische Betriebsbremseinrichtungen beschränkt, sie kann vielmehr für jegliche Art druckmittelbetätigter Betriebsbremseinrichtungen verwendet werden, in denen ABS-Drucksteuerventile verbaut sind.

Die vorangehend beschriebenen Ausführungsformen der Erfindung setzen das Vorhandensein eines Drucksensors in der zwischen der Ventileinrichtung und dem ABS-Steuerdruckventil verlaufenden Druckmittelleitung voraus.

Das Fehlersignal kann optisch, beispielsweise durch eine Warnleuchte im Fahrerhaus des Fahrzeugs und/oder akustisch angezeigt werden. Denkbar ist aber auch eine Eintragung in einem auslesbaren Fehlerspeicher des elektronischen Steuergeräts.

Genaueres geht aus der folgenden Beschreibung von Ausführungsbeispielen hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: einen schematischen Aufbauplan einer Betriebsbremseinrichtung eines Nutzfahrzeugs gemäß einer bevorzugten Ausführungsform der Erfindung;
- Fig.2: einen gemessenen Druckverlauf sowie einen Referenzdruckverlauf über der Zeit.

### Beschreibung der Ausführungsbeispiele

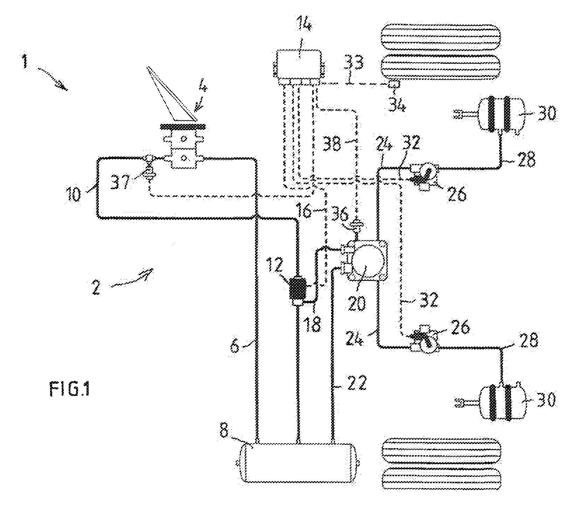

In Fig.1 ist eine bevorzugte Ausführungsform einer elektro-pneumatischen Betriebsbremseinrichtung 1 eines Nutzfahrzeugs dargestellt. Die Betriebsbremseinrichtung 1 hat zwei Bremskreise, einen Bremskreis für die Vorderachse und einen Bremskreis für die angetriebene Hinterachse, wobei aus Übersichtlichkeitsgründen hier lediglich der Bremskreis 2 für die Hinterachse beschrieben wird. Die Betriebsbremseinrichtung 1 verfügt über ein bremsschlupfgeregeltes Antiblockiersystem (ABS) sowie vorzugsweise auch über eine Antriebsschlupfregelung (ASR).

Ausgehend von einem fahrerfußbetätigten Betriebsbremsventil 4, dessen pneumatischer Hinterachsbremskreis 2 durch eine Vorratsleitung 6 von einem Hinterachsvorrat 8 mit Druckluft versorgt wird, erstreckt sich eine Steuerdruckleitung 10 bis an einen Steuereingang eines ASR-Ventils 12, welches bevorzugt durch ein einerseits durch den vom Betriebsbremsventil 4 ausgesteuerten Steuerdruck in der Steuerdruckleitung 10 und andererseits durch in einer von einem elektronischen Steuergerät 14 heran geführten elektrischen Steuerleitung 16 geleitete elektrische Signale gesteuertes 3/2-Wege-Ventil gebildet wird. An seinem Arbeitsausgang ist das ASR-Ventil 12 durch eine Druckmittelleitung 18 mit einem Steuereingang eines Relaisventils 20 verbunden, dessen Vorratsanschluss mittels einer Vorratsleitung 22 ebenfalls an den Hinterachsvorrat 8 angeschlossen ist. Die beiden Arbeitsausgänge des Relaisventils 20 stehen mit je einer Druckmittelleitung 24 in Verbindung, welche in jeweils ein ABS-Drucksteuerventil 26 mündet.

Solche ABS-Drucksteuerventile 26 sind hinreichend bekannt, beispielsweise aus der EP 0 304 610 B1. Sie beinhalten jeweils ein Einlassventil und ein Auslassventil. Die ABS-Drucksteuerventile 26 sind über pneumatische Verbindungsleitungen 28 jeweils mit einem druckluftbetätigten aktiven Betriebsbremszylinder 30 verbunden.

Durch die ABS-Drucksteuerventile 26 werden schlupfgeregelte Bremsungen im Rahmen des ABS realisiert, indem sie vom elektronischen Steuergerät 14 mittels Signalleitungen 32 in Abhängigkeit der von der jeweils vorliegenden, von je einem Raddrehzahlsensor 34 gemessenen Raddrehzahl und dem daraus berechneten Bremsschlupf zum Druckhalten, Drucksteigern oder Drucksenken angesteuert werden. Die Raddrehzahlsensoren sind hierzu mittels Signalleitungen 33 mit dem elektronischen Steuergerät 14 verbunden.

Der Übersichtlichkeit halber sind in Fig.1 lediglich für die Hinterachsseite die oben beschriebenen Elemente dargestellt. Das Prinzip dieser Ausführung kann ebenso an der Vorderachse angewendet werden. Dementsprechend muss es sich bei dem Ventil 12 nicht um ein ASR-Ventil handeln. Vielmehr kann das Ventil 12 ein beliebiges Schaltventil insbesondere auch für die Vorderachse darstellen im Rahmen von ESP, ACC (Adaptive Cruise Control) etc..

Zum Drucksenken im jeweiligen Betriebsbremszylinder 30 wird beispielsweise das Auslassventil des zugeordneten ABS-Drucksteuerventils 26 bei geschlossenem Einlassventil geöffnet, zum Drucksteigern wird das Einlassventil geöffnet und das Auslassventil geschlossen, zum Druckhalten wird der Druck im Betriebsbremszylinder 30 durch das geschlossene Einlassventil und das geschlossene Auslassventil gehalten. "Geschlossen" bedeutet dabei, dass das jeweilige Ventil in Sperrstellung geschaltet ist, wohingegen "geöffnet" heißt, dass das betreffende Ventil in Durchgangsstellung geschaltet ist. Je nachdem ob die Einlass- bzw. Auslassventile stromlos bzw. bestromt geöffnet oder geschlossen werden sollen, erfolgt daher eine entsprechende Ansteuerung durch das elektronische Steuergerät 14.

Das ASR-Ventil 12 schaltet, falls es über die pneumatische Steuerleitung 10 durch eine Betätigung des Betriebsbremsventils 4 an seinem pneumatischen Steuereingang mit Steuerdruckluft beaufschlagt wird, diesen Steuerdruck auf den pneumatischen Steuereingang des Relaisventils 20, woraufhin dieses einen aus dem Vorratsdruck des Hinterachsvorrats 8 einen Bremsdruck moduliert. Dieser Bremsdruck wird dann in die jeweilige, dem Relaisventil 20 und dem ABS-Drucksteuerventil 26 zwischengeordnete Druckmittelleitung 24 eingesteuert. Der in dieser Druckmittelleitung 24 herrschende Druck wird von einem Drucksensor 36 gemessen und an das elektronische Steuergerät 14 mittels einer Signalleitung 38 rückgemeldet. Aus Übersichtlichkeitsgründen ist in Fig.1 lediglich ein Drucksensor 36 in der dem rechten Hinterrad zugeordneten Druckmittelleitung 24 angeordnet. Selbstverständlich kann auch ein solcher Drucksensor auch in der dem linken Hinterrad zugeordneten Druckmittelleitung angeordnet sein.

Falls keine Bremsschlupfregelung notwendig ist, wird der Bremsdruck in die Betriebsbremszylinder 30 der Hinterachse unverändert eingesteuert. Bei Auftreten von unzulässigem Bremsschlupf, welcher von dem jeweiligen Raddrehzahlsensor 34 detektiert werden kann, wird der Druck im Betriebsbremszylinder 30 durch Öffnen des Auslassventils des zugeordneten ABS-Drucksteuerventils 26 kurzzeitig gesenkt und danach wieder erhöht bzw. gehalten.

Bei unzulässigem Antriebsschlupf, welcher ebenfalls durch die über die elektrischen Signalleitungen 33 an das elektronische Steuergerät 14 gemeldeten Raddrehzahlen festgestellt werden kann, erfolgt die Ansteuerung des ASR-Ventils 12 über die elektrische Steuerleitung 16 durch das elektronische Steuergerät 14 ohne Zutun des Fahrers automatisch. Dann schaltet das ASR-Ventil 12 einen vom Vorratsdruck des Hinterachsvorrats 8 abgeleiteten Druck auf den pneumatischen Steuereingang des Relaisventils 20, welches daraufhin einen von diesem Druck angeleiteten Bremsdruck in die Druckmittelleitungen 24 zwischen Relaisventil 20 und ABS-Drucksteuerventil 26 einsteuert, um die antriebsschlupfenden Räder auf einen zulässigen Antriebsschlupf einzubremsen.

Das Relaisventil 20 ist nicht notwendigerweise vorhanden, so dass sich die den Drucksensor 36 aufweisende Druckmittelleitung 24 auch direkt zwischen dem ASR-Ventil 12 und dem ABS-Drucksteuerventil erstrecken kann.

Das elektronische Steuergerät 14, vorzugsweise ein kombiniertes ABS-/ASR-Bremssteuergerät ist ausgebildet, dass es im Rahmen wenigstens eines Testlaufs das Einlassventil und/oder das Auslassventil der ABS-Drucksteuerventile 26 und/oder das ASR-Ventil 12 steuert, um in der hier dem rechten Hinterrad zugeordneten Druckmittelleitung 24 einen von dem Drucksensor 36 erfassbaren Druck zu erzeugen.

Ein solcher Testlauf kann beispielsweise bei oder nach jedem Fahrzeugstart oder bei Fahrzeugstillstand in regelmäßigen oder unregelmäßigen Zeitabständen durchgeführt werden.

Durch Auswertung der von dem Drucksensor 36 gelieferten Signale durch das elektronische Steuergerät 14 wird dann der zeitliche Druckverlauf des in die Druckmittelleitung 24 eingesteuerten Drucks erfasst und mit einem erwarteten, in einem Speicher des elektronischen Steuergeräts 14 gespeicherten Druckverlauf verglichen. Bei einer nach vorbestimmten Kriterien vorliegenden Abweichung des erfassten Druckverlaufs von dem erwarteten gespeicherten Druckverlauf wird dann ein Fehlersignal erzeugt, welches auf einen Defekt oder Fehler in einem oder in mehreren Ventile hinweist.

Das elektronische Steuergerät 14 ist ausgebildet, dass es im Rahmen eines ersten Testlaufs das Einlassventil und das Auslassventil des ABS-Drucksteuerventils 26 in Sperrstellung steuert und dann das ASR-Ventil 12 steuert, um den vom Hinterachsvorrat 8 abgeleiteten Druck in die Druckmittelleitung 24 einzusteuern. Demnach wird die Druckmittelleitung 24 durch das ASR-Ventil 12 druckbeaufschlagt, wobei das Volumen der Druckmittelleitung 24 durch die geschlossenen Einlass- und Auslassventile des ABS-Drucksteuerventils 26 zu dem Betriebsbremszylinder 30 hin abgeschlossen ist.

Bei intaktem Einlassventil des ABS-Drucksteuerventils 26 ergibt sich dann ein schneller Anstieg des Druckverlaufs über der Zeit, weil lediglich das relativ kleine Volumen der Druckmittelleitung 24 druckbeaufschlagt wird. Dieser Druckverlauf wird von dem Drucksensor 36 in der Druckmittelleitung 24 aufgenommen.

Ist das Einlassventil dagegen defekt, weil es beispielsweise nicht vollständig schließt, so ergibt sich ein langsamerer Anstieg des Druckverlaufs über der Zeit, da dann zusätzlich das Leitungsvolumen der das ABS-Drucksteuerventil 26 mit dem Betriebsbremszylinder 30 verbindenden Verbindungsleitung sowie eine Arbeitskammer des Betriebsbremszylinders mit Druckmittel befüllt wird. Durch einen Vergleich eines gespeicherten zeitlichen Referenz-Druckmittelverlaufs mit dem tatsächlichen gemessenen Druckmittelverlauf beispielsweise anhand des jeweiligen Druckgradienten ist daher beim Einlassventil oder beim Auslassventil des ABS-Drucksteuerventils 26 oder beim ASR-Ventil 12 eine Fehlerdetektion möglich.

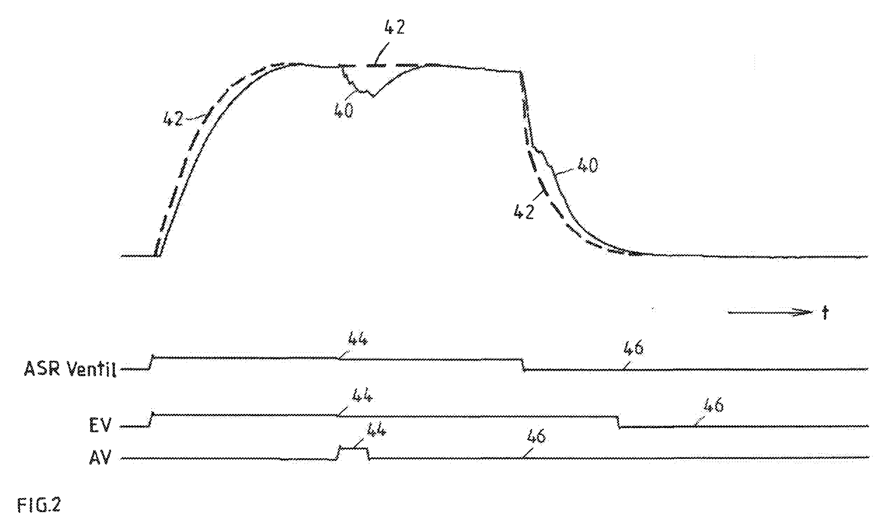

In Fig.2 ist ein gemessener Druckverlauf (durchgezogene Linie) 40 einem gespeicherten zeitlichen Referenzdruckverlauf (gestrichelte Linie) 42 über der Zeit t gegenübergestellt. Darunter ist ein Bestromen 44 des betreffenden Ventils (ASR-Ventil 12, Einlassventil EV, Auslassventil AV) durch das Steuergerät 14 durch eine Erhebung und ein Entstromen 46 des betreffenden Ventils durch eine Senke 46 zeichnerisch gekennzeichnet.

Dabei wird zunächst das ASR-Ventil 12 durch Bestromen 44 angesteuert, um einen von dem Hinterachsvorrat 8 abgeleiteten Druck über das Relaisventil 20 in die Druckmittelleitung 24 einzusteuern. Gleichzeitig wird das Einlassventil des ABS-Drucksteuerventils 26 bestromt, um es in Sperrstellung zu schalten. Dann müsste sich nach einiger Zeit bei korrekt schließendem Einlassventil ein konstanter Druck in der Druckmittelleitung 24 aufbauen wie der Referenz-Druckverlauf 42 zeigt. Wenn dann zusätzlich das Auslassventil bestromt wird, um es kurzzeitig zu öffnen bleibt der (dann abgesperrte) Druck konstant. Ist das Einlassventil dagegen defekt, weil es beispielsweise nicht vollständig schließt, so ergibt sich ein Druckabfall (siehe Knick im Druckverlauf 40 in Fig.2) in der Druckmittelleitung 24 solange das Auslassventil angesteuert wird.

Gemäß einer weiteren Ausführungsform des Verfahrens kann das elektronische Steuergerät 14 ausgebildet sein, dass es bei Steuerung des Einlassventils in Schließstellung und bei Einsteuern von Druck in die Druckmittelleitung 24 durch das ASR-Ventil 12 das Auslassventil des ABS-Drucksteuerventils 26 in Öffnungsstellung steuert. Dann wird im Falle eines nicht vollständig schließenden Einlassventils das in die Druckmittelleitung 24 eingesteuerte Druckmittel teilweise in die Atmosphäre abgelassen, wobei sich ein gegenüber einem gespeicherten Referenzdruckverlauf messbar verzögerter Druckaufbau in der Druckmittelleitung 24 ergibt, welcher von dem Drucksensor 36 messbar ist. Außerdem ist die Entlüftung durch das Auslassventil deutlich hörbar, so dass das diesbezügliche Entlüftungsgeräusch auf ein defektes Einlassventil eines ABS-Drucksteuerventils 26 hinweist.

Darüber hinaus kann das elektronische Steuergerät 14 ausgebildet sein, dass es bei Steuerung des Auslassventils in Öffnungsstellung zusätzlich das Einlassventil des ABS-Drucksteuerventils 26 in Öffnungsstellung steuert. Dann wird der über das ASR-Ventil 12 und das Relaisventil 20 in die Druckmittelleitung 24 eingesteuerte Druck durch das geöffnete Einlassventil des ABS-Drucksteuerventils 26 in den Betriebsbremszylinder 30 eingelassen. Dabei kann ein defektes, weil nicht vollständig öffnendes Auslassventil den Druck im Betriebsbremszylinder 30 nicht kurzzeitig senken, was auf einen Fehler des Auslassventils hindeutet.

Wenn bei gemeinsamem Ansteuern des ASR-Ventils 12 und Öffnen des Auslassventils und bei gleichzeitig geöffnetem Einlassventil der Druckverlauf überwacht wird, kann bei einem fehlerhaften, d.h. bei einem nicht vollständig öffnenden Auslassventil des ABS-Drucksteuerventils 26 ein schnellerer Druckaufbau festgestellt werden als bei einem intakten Auslassventil.

Besonders bevorzugt ist das elektronische Steuergerät 14 ausgebildet, dass es das ASR-Ventil 12 steuert, dass dieses einen vom Hinterachsvorrat 8 abgeleiteten Druck über das Relaisventil 12 in die Druckmittelleitung 24 für einen vorbestimmten Zeitraum einsteuert, insbesondere für einen sehr kurzen Zeitraum, beispielsweise für 200 ms. Ein solcher Druckimpuls kann vom Drucksensor 36 in der Druckmittelleitung 24 erfasst werden, insbesondere hinsichtlich der maximalen Druckhöhe und des Druckabfalls nach dem Impuls als charakteristische Kenngrößen. Abweichungen von diesen Kenngrößen deuten dann auf Ventilfehler hin.

Nicht zuletzt kann das elektronische Steuergerät 14 ausgebildet sein, dass es im Rahmen eines zweiten Testlaufs das Einlassventil und das Auslassventil des ABS-Drucksteuerventils 26 zunächst in Sperrstellung steuert und nach einer Betätigung des Betriebsbremsventils 4 durch den Fahrer das ASR-Ventil 12 in eine Durchlassstellung gesteuert wird, bis der vom Drucksensor 36 in der dem Relaisventil 20 und dem ABS-Drucksteuerventil 26 zwischengeordneten Druckmittelleitung 24 erfasste Druck konstant ist. Dann wird das Auslassventil des ABS-Drucksteuerventils 26 in Öffnungsstellung geschaltet, wodurch der Betriebsbremszylinder 30 druckentlastet wird. Falls das Einlassventil des ABS-Drucksteuerventils 26 einen Defekt aufweist, dann strömt Druckmittel aus der Druckmittelleitung 24 in den Betriebsbremszylinder nach, wodurch ein Druckabfall in der Druckmittelleitung 24 durch den Drucksensor 36 detektierbar ist.

Anstatt eines ASR-Ventils 12 auch ein Druckregelmodul vorgesehen sein, beispielsweise ein 1-Kanal-Druckregelmodul, zur Erzeugung eines geregelten Bremsdrucks in dem wenigstens einen Betriebsbremszylinder 30, wobei in diesem Fall der Drucksensor 36, welcher den Druck in der sich dann zwischen dem Druckregelmodul und dem ABS-Drucksteuerventil 26 erstreckenden Druckmittelleitung 24 misst, bereits in dem Druckregelmodul integriert ist. Weiterhin ist auch das Relaisventil 20 bereits in dem Druckregelmodul integriert, welches dann auch die ASR-Funktionen ausführt.

Nicht zuletzt kann anstatt eines ASR-Ventils 12 auch ein Proportionalventil verbaut sein, solange dieses von einem elektronischen Steuergerät 14 angesteuert werden kann, um Druckluft in die Druckmittelleitung 24 einzusteuern oder eine solche Einsteuerung zu unterbinden.

Die vorangehend beschriebene Ausführungsformen der Erfindung setzen das Vorhandensein eines Drucksensors 36 in der zwischen dem ASR-Ventil 12 und dem ABS-Steuerdruckventil 26 verlaufenden Druckmittelleitung 24 voraus.

Weiterhin kann auch die Funktion des Drucksensors 36 selbst überprüft werden, insbesondere, ob dieser im gesamten Druckmessbereich korrekt arbeitet. Denn in den meisten Betriebsbremssituationen wird die Betriebsbremse lediglich mit einem Bruchteil des maximal möglichen Bremsdrucks (Vollbremsung) beaufschlagt, so dass ein beispielsweise direkt am Bremszylinder 30 angeordneter Drucksensor im Betrieb dann meist nur Drücke bis zu diesem Bruchteil misst und seine Funktion für höhere Drücke nur selten zum Einsatz kommt und getestet werden kann. Wird der Drucksensor 36 hingegen wie in Fig.1 gezeigt in den Strömungsweg zwischen dem ASR-Ventil 12 und den ABS-Ventilen 26 angeordnet, so kann im Rahmen des Testlaufs das volle Druckspektrum von einem minimalen Bremsdruck bis zu einem maximalen Bremsdruck durchfahren und somit auch die Funktion des Drucksensors 36 im Hinblick auf den gesamten Messbereich überprüft werden.

Hierzu kann ein Vergleich (Gleichlauf) des vom Drucksensor 36 gemessenen Drucks mit dem Steuerdruck herangezogen werden, welcher von einem Drucksensor 37 gemessen wird, der in der vom Betriebsbremsventil 4 zum Ventil 12 gezogene Steuerdruckleitung 10 angeordnet ist.

Nicht zuletzt kann mit Hilfe der Drucksensoren 36, 37 auch die Funktion des Ventils 12 überprüft werden. Denn dieses Ventil 12 kann beispielsweise in seiner Durchlassstellung fehlerhaft hängen bleibt, obwohl es in Sperrstellung gesteuert wurde, weil weder der Fahrer das Betriebsbremsventil 4 betätigt hat, noch eine elektrische Ansteuerung des Ventils 12 erfolgt ist. In diesem Fall zeigt der Drucksensor 37 einen niedrigen Druck, der Drucksensor 37 wegen des in Durchlassstellung verbleibenden Ventils 12 dagegen einen hohen Druck.

### Bezugszeichenliste

- 1: Betriebsbremseinrichtung
- 2: Bremskreis
- 4: Betriebsbremsventil
- 6: Vorratsleitung
- 8: Hinterachsvorrat
- 10: Steuerdruckleitung
- 12: ASR-Ventil
- 14: Steuergerät
- 16: Steuerleitung
- 18: Druckmittelleitung
- 20: Relaisventil
- 22: Vorratsleitung
- 24: Druckmittelleitung
- 26: ABS-Drucksteuerventil
- 28: Verbindungsleitung
- 30: Betriebsbremszylinder
- 32: Signalleitung
- 33: Signalleitung
- 34: Raddrehzahlsensor
- 36: Drucksensor
- 37: Drucksensor
- 38: Signalleitung
- 40: gemessener Druckverlauf
- 42: Referenz-Druckverlauf
- 44: Bestromung
- 46: Entstromen

## Patentansprüche

1. Betriebsbremseinrichtung (1) eines Fahrzeugs mit
a) wenigstens einem von einem elektronischen Steuergerät (14) zum schlupfgeregelten Bremsen gesteuerten, wenigstens ein Einlassventil und ein Auslassventil aufweisenden und einem druckmittelbetätigten Bremszylinder (30) vorgeordneten ABS-Drucksteuerventil (26),
b) einer das ABS-Drucksteuerventil (26) mit Druckmittel versorgenden Druckmittelleitung (24) zwischen dem ABS-Drucksteuerventil (26) und einer dem ABS-Drucksteuerventil (26) vorgeordneten Ventileinrichtung (12), in welche ein von der Ventileinrichtung (12) gesteuerter Druck einsteuerbar ist, wobei
c) die Ventileinrichtung (12) einen von einem Vorratsdruck eines Druckmittelvorrats (8) abgeleiteten Druck abhängig von einer Ansteuerung durch das elektronische Steuergerät (14) in die Druckmittelleitung (24) einsteuert, wobei
d) in der Druckmittelleitung (24) zwischen dem ABS-Drucksteuerventil (26) und der Ventileinrichtung (12) wenigstens ein Drucksensor (36) zur Messung des Drucks in der Druckmittelleitung (24) angeordnet ist, wobei das elektronische Steuergerät (14)
e) im Rahmen wenigstens eines Testlaufs das Einlassventil und/oder das Auslassventil des ABS-Drucksteuerventils (26) und die Ventileinrichtung (12) steuert, um in der Druckmittelleitung (24) einen von dem wenigstens einen Drucksensor (36) erfassbaren Druck zu erzeugen, **dadurch gekennzeichnet, dass** das elektronische Steuergerät (14) im Rahmen eines ersten Testlaufs
f) das Einlassventil und das Auslassventil des ABS-Drucksteuerventils (26) in Sperrstellung steuert und dann
g) die Ventileinrichtung (12) steuert, um den vom Druckmittelvorrat (8) abgeleiteten Druck in die Druckmittelleitung (24) einzusteuern, und dann
h) durch Auswertung der von dem Drucksensor (36) gelieferten Signale den zeitlichen Druckverlauf des in die Druckmittelleitung (24) eingesteuerten Drucks erfasst und mit einem erwarteten gespeicherten Druckverlauf vergleicht, und dann
i) bei einer nach vorbestimmten Kriterien vorliegenden Abweichung des erfassten Druckverlaufs von dem erwarteten gespeicherten Druckverlauf ein Fehlersignal erzeugt.

2. Betriebsbremseinrichtung nach Anspruch 1, **dadurch gekennzeichnet, dass** das elektronische Steuergerät (14) nach der Steuerung des Einlassventils und des Auslassventils des ABS-Drucksteuerventils (26) in Sperrstellung und im Rahmen der Steuerung der Ventileinrichtung (12), um den vom Druckmittelvorrat (8) abgeleiteten Druck in die Druckmittelleitung (24) einzusteuern zusätzlich das Auslassventil des ABS-Drucksteuerventils (26) in Öffnungsstellung steuert und dann durch Auswertung der von dem Drucksensor (36) gelieferten Signale den zeitlichen Druckverlauf des in die Druckmittelleitung (24) eingesteuerten Drucks erfasst und mit einem erwarteten gespeicherten Druckverlauf vergleicht, und dann bei einer nach vorbestimmten Kriterien vorliegenden Abweichung des erfassten Druckverlaufs von dem erwarteten gespeicherten Druckverlauf ein Fehlersignal erzeugt.

3. Betriebsbremseinrichtung nach Anspruch 1, **dadurch gekennzeichnet, dass** das elektronische Steuergerät (14) nach der Steuerung des Einlassventils und des Auslassventils des ABS-Drucksteuerventils (26) in Sperrstellung und im Rahmen der Steuerung der Ventileinrichtung (12), um den vom Druckmittelvorrat (8) abgeleiteten Druck in die Druckmittelleitung (24) einzusteuern zusätzlich das Einlassventil und das Auslassventil des ABS-Drucksteuerventils (26) in Öffnungsstellung steuert und dann durch Auswertung der von dem Drucksensor (36) gelieferten Signale den zeitlichen Druckverlauf des in die Druckmittelleitung (24) eingesteuerten Drucks erfasst und mit einem erwarteten gespeicherten Druckverlauf vergleicht, und dann bei einer nach vorbestimmten Kriterien vorliegenden Abweichung des erfassten Druckverlaufs von dem erwarteten gespeicherten Druckverlauf ein Fehlersignal erzeugt.

4. Betriebsbremseinrichtung nach Anspruch 1 oder 2, **dadurch gekennzeichnet, dass** das elektronische Steuergerät (14) die Ventileinrichtung (12) steuert, dass diese den vom Druckmittelvorrat (8) abgeleiteten Druck in die Druckmittelleitung (24) für einen vorbestimmten Zeitraum als Druckimpuls einsteuert.

5. Betriebsbremseinrichtung nach einem der vorhergehenden Ansprüche, **dadurch gekennzeichnet, dass** die Ventileinrichtung (12) ein ASR-Ventil zum schlupfgeregelten Beschleunigen des Fahrzeugs beinhaltet, welches einerseits durch das elektronische Steuergerät (14) elektrisch steuerbar und andererseits von einem durch ein fahrerbetätigtes Betriebsbremsventil (4) ausgesteuerten Steuerdruck druckmittelsteuerbar ist, derart, dass das ASR-Ventil (12) bei Aussteuerung des Steuerdrucks durch das Betriebsbremsventil (4) diesen Steuerdruck in die Druckmittelleitung (24) einsteuert und bei einer Ansteuerung durch das elektronische Steuergerät (14) im Rahmen einer ASR-Funktion den vom Druckmittelvorrat (8) abgeleiteten Druck in die Druckmittelleitung (24) einsteuert.

6. Betriebsbremseinrichtung nach Anspruch 4, **dadurch gekennzeichnet, dass** das elektronische Steuergerät (14) ausgebildet ist, dass es im Rahmen eines zweiten Testlaufs
a) das Einlassventil und das Auslassventil des wenigstens einen ABS-Drucksteuerventils (26) zunächst in Sperrstellung steuert,
b) nach einer Betätigung eines Betriebsbremsventils (4) durch den Fahrer die Ventileinrichtung (12) in eine Durchlassstellung gesteuert wird, bis der vom Drucksensor (36) in der Druckmittelleitung (24) erfasste Druck konstant ist, und dann
c) das Auslassventil des wenigstens einen ABS-Drucksteuerventils (26) in Öffnungsstellung geschaltet wird.

7. Betriebsbremseinrichtung nach einem der Ansprüche 1 bis 5, **dadurch gekennzeichnet, dass** die Ventileinrichtung (12) ein Druckregelmodul zur Erzeugung eines geregelten Bremsdrucks in dem wenigstens einen Bremszylinder (30) beinhaltet und dass der Drucksensor (36) in dem Druckregelmodul integriert ist.

## Claims

1. Service brake device (1) of a vehicle, comprising
a) at least one ABS pressure control valve (26) which is controlled for slip-regulated braking by an electronic control unit (14), has at least one inlet valve and one outlet valve and is arranged upstream of a pressure medium actuated brake cylinder (30),
b) a pressure medium line (24) which supplies the ABS pressure control valve (26) with pressure medium between the ABS pressure control valve (26) and a valve device (12) arranged upstream of the ABS pressure control valve (26) into which a pressure controlled by the valve device (12) is feedable, wherein
c) the valve device (12) feeds a pressure derived from a reservoir pressure of a pressure medium reservoir (8) into the pressure medium line (24) as a function of an activation by the electronic control unit (14), wherein
d) at least one pressure sensor (36) for measuring the pressure in the pressure medium line (24) is arranged in the pressure medium line (24) between the ABS pressure control valve (26) and the valve device (12), wherein the electronic control unit (14)
e) controls the inlet valve and/or the outlet valve of the ABS pressure control valve (26) and the valve device (12) within the course of at least one test run, in order to generate a pressure detectable by the at least one pressure sensor (36) in the pressure medium line (24), **characterized in that** the electronic control device (14)
f) directs the inlet valve and the outlet valve of the ABS pressure control valve (26) into the blocking position, and then
g) controls the valve device (12) in order to feed pressure derived from the pressure medium reservoir (8) into the pressure medium line (24), within the course of a first test run, and then
h) by evaluation of the signals supplied by the pressure sensor (36) detects the temporal pressure profile of the pressure fed into the pressure medium line (24) and compares said pressure profile with an expected stored pressure profile, and then
i) generates an error signal in the event of a deviation, present in accordance with predetermined criteria, of the detected pressure profile from the expected stored pressure profile.

2. Service brake device according to Claim 1, **characterized in that**, after directing the inlet valve and the outlet valve of the ABS pressure control valve (26) into the blocking position and, within the scope of controlling the valve device (12) in order to feed the pressure derived from the pressure medium reservoir (8) into the pressure medium line (24), the electronic control unit (14) additionally directs the outlet valve of the ABS pressure control valve (26) into the open position and then, by evaluation of the signals, which are supplied by the pressure sensor (36), detects the temporal pressure profile of the pressure fed into the pressure medium line (24) and compares said profile with an expected stored pressure profile, and then, in the event of a deviation, which is present in accordance with predetermined criteria, of the detected pressure profile from the expected stored pressure profile, generates an error signal.

3. Service brake device according to Claim 1, **characterized in that**, after directing the inlet valve and the outlet valve of the ABS pressure control valve (26) into the blocking position and, within the scope of controlling the valve device (12) in order to feed the pressure derived from the pressure medium reservoir (8) into the pressure medium line (24), the electronic control unit (14) additionally directs the inlet valve and the outlet valve of the ABS pressure control valve (26) into the open position and then, by evaluation of the signals, which are supplied by the pressure sensor (36), detects the temporal pressure profile of the pressure fed into the pressure medium line (24) and compares said profile with an expected stored pressure profile, and then, in the event of a deviation, which is present in accordance with predetermined criteria, of the detected pressure profile from the expected stored pressure profile, generates an error signal.

4. Service brake device according to Claim 1 or 2, **characterized in that** the electronic control unit (14) controls the valve device (12), and that the latter feeds the pressure derived from the pressure medium reservoir (8) into the pressure medium line (24) in the form of a pressure pulse for a predetermined period of time.

5. Service brake device according to one of the preceding claims, **characterized in that** the valve device (12) contains an ASR valve for the slip-regulated acceleration of the vehicle, which valve is firstly controllable electrically by the electronic control unit (14) and is secondly pressure medium controllable by a control pressure output by a driver actuated service brake valve (4), such that, when the control pressure is output by the service brake valve (4), the ASR valve (12) feeds said control pressure into the pressure medium line (24) and, when said control pressure is activated by the electronic control unit (14) within the scope of an ASR function, feeds the pressure derived from the pressure medium reservoir (8) into the pressure medium line (24).

6. Service brake device according to Claim 4, **characterized in that** the electronic control unit (14) is designed such that it
a) first of all directs the inlet valve and the outlet valve of the at least one ABS pressure control valve (26) into the blocking position,
b) after actuation of the service brake valve (4) by the driver, the valve device (12) is directed into a pass-through position until the pressure detected by the pressure sensor (36) in the pressure medium line (24) is constant, and then
c) the outlet valve of the at least one ABS pressure control valve (26) is switched into the open position, within the course of a second test run.

7. Service brake device according to one of Claims 1 to 5, **characterized in that** the valve device (12) contains a pressure regulating module for generating a regulated brake pressure in the at least one brake cylinder (30), and **in that** the pressure sensor (36) is integrated in the pressure regulating module.

## Revendications

1. Système de freinage de service (1) d'un véhicule, comprenant
a) au moins une valve de commande de pression antiblocage (26) commandée par un dispositif de commande électronique (14) pour le freinage à régulation antipatinage, et comprenant au moins une soupape d'entrée et une soupape de sortie, qui est disposée en amont d'un cylindre de frein (30) actionné moyennant un milieu sous pression,
b) un conduit de milieu sous pression (24) pour l'alimentation de ladite valve de commande de pression antiblocage (26) en milieu sous pression, entre ladite valve de commande de pression antiblocage (26) et un moyen à soupape (12) disposé en aval de ladite valve de commande de pression antiblocage (26), dans lequel une pression commandée par ledit moyen à soupape (12) est contrôlable,
c) dans lequel ledit moyen à soupape (12) contrôle une pression dérivée d'une pression de réserve d'un réservoir de milieu sous pression (8) en fonction du contrôle par ledit dispositif de commande électronique (14) dans ledit conduit de milieu sous pression (24),
d) dans lequel au moins un capteur de pression (36) est disposé dans ledit conduit de milieu sous pression (24) entre ladite valve de commande de pression antiblocage (26) et ledit moyen à soupape (12) pour le mesurage de la pression dans ledit conduit de milieu sous pression (24), audit dispositif de commande électronique (14)
e) commandant ladite soupape d'entrée et/ou ladite soupape de sortie de ladite valve de commande de pression antiblocage (26) et ledit moyen à soupape (12) dans le cadre d'au moins un test dans le but d'engendrer une pression dans ledit conduit de milieu sous pression, qui est détectable par ledit capteur de pression (36),
**caractérisé en ce que** ledit dispositif de commande électronique (14) commande, dans le cadre d'un premier test,
f) ladite soupape d'entrée et ladite soupape de sortie de ladite valve de commande de pression antiblocage (26) en position de blocage, et ensuite
g) commande ledit moyen à soupape (12) dans le but de contrôler la pression dérivée dudit réservoir de milieu de pression (8) dans ledit conduit de milieu sous pression (24), et ensuite
h) détecte l'allure de pression dans le temps de la pression contrôlée dans ledit conduit de milieu sous pression (24) par évaluation des signaux fournis par ledit capteur de pression (36), en les comparnt à une allure de pression attendue et mise en mémoire, et ensuite
i) engendre un signal d'erreur au cas d'une variation de l'allure de pression détectée de l'allure attendue et mise en mémoire, qui arrive en correspondance avec des critères prédéterminés.

2. Système de freinage de service selon la revendication 1, **caractérisé en ce qu'**après la commande de ladite soupape d'entrée et ladite soupape de sortie de ladite valve de commande de pression antiblocage (26) en position de blocage et dans le cadre de commande dudit moyen à soupape (12) dans le but de contrôler la pression dérivée dudit réservoir de milieu sous pression (8) dans ledit conduit de milieu sous pression (24), ledit dispositif de commande électronique (14) commande également ladite soupape de sortie de ladite valve de commande de pression antiblocage (26) en position de passage, et ensuite détecte l'allure de la pression dans le temps de la pression contrôlée dans ledit conduit de milieu sous pression (24) par évaluation des signaux fournis par ledit capteur de pression (36) et les compare à une allure de pression attendue et mise en mémoire, et ensuite engendre un signal d'erreur au cas d'une variation de l'allure de pression détectée de l'allure attendue et mise en mémoire, qui arrive en correspondance avec des critères prédéterminés.

3. Système de freinage de service selon la revendication 1, **caractérisé en ce qu'**après la commande de ladite soupape d'entrée et ladite soupape de sortie de ladite valve de commande de pression antiblocage (26) en position de blocage et dans le cadre de commande dudit moyen à soupape (12) dans le but de contrôler la pression dérivée dudit réservoir de milieu sous pression (8) dans ledit conduit de milieu sous pression (24), ledit dispositif de commande électronique (14) commande également ladite soupape d'entrée et ladite soupape de sortie de ladite valve de commande de pression antiblocage (26) en position de passage et ensuite détecte l'allure de pression dans le temps de la pression contrôlée dans ledit conduit de milieu sous pression (24) par évaluation des signaux fournis par ledit capteur de pression (36), en les comparant à une allure de pression attendue et mise en mémoire, après quoi il engendre un signal d'erreur au cas d'une variation de l'allure de pression détectée de l'allure attendue et mise en mémoire, qui arrive en correspondance avec des critères prédéterminés.

4. Système de freinage de service selon la revendication 1 ou 2, **caractérisé en ce que** ledit dispositif de commande électronique (14) commande ledit moyen à soupape (12) de façon, que le dernier contrôle la pression dérivée dudit réservoir de milieu sous pression (8) dans ledit conduit de milieu sous pression (24) en tant qu'une impulsion de pression pour une période prédéterminée.

5. Système de freinage de service selon une quelconque des revendications précédentes, **caractérisé en ce que** ledit moyen à soupape (12) contient une valve ASR pour l'accélération du véhicule contrôlé en vue de patinage, qui, d'un côté, est commandable par voie électrique moyennant ledit dispositif de commande électronique (14) et, d'autre côté, est commandable par un milieu sous pression, utilisant une pression de commande contrôlée par une valve de commande pour le freinage de service (4), qui est actionnée par le conducteur, d'une telle façon, qu'au cas d'un contrôle de la pression de commande moyennant ladite valve de commande pour le freinage de service (4), ladite valve ASR (12) contrôle cette pression de commande dans ledit conduit de milieu sous pression (24) et, au cas d'un contrôle moyennant ledit dispositif de commande électronique (14) dans le cadre d'une fonction ASR, contrôle la pression dérivée dudit réservoir de milieu sous pression dans ledit conduit de milieu sous pression (24).

6. Système de freinage de service selon la revendication 4, **caractérisé en ce que** ledit dispositif de commande électronique (14) est configuré de façon, qu'au cours d'un deuxième test,
a) il commande ladite soupape d'entrée et ladite soupape de sortie dudit au moins une valve de commande de pression antiblocage (26) d'abord en position de blocage,
b) après l'actionnement d'une valve de commande pour de freinage de service (4) par le conducteur, ledit dispositif à soupape (12) est contrôlé en une position de passage jusqu'à ce que la pression détectée par ledit capteur de pression (36) dans ledit conduit de milieu sous pression (24) est constante, et ensuite
c) ladite soupape de sortie de ladite au moins une valve de commande de pression antiblocage (26) est commutée en position de passage.

7. Système de freinage de service selon une quelconque des revendications 1 à 5, **caractérisé en ce que** ledit moyen à soupape (12) comprend un module régulateur de pression afin d'engendre une pression de freinage réglée dans ledit au moins un cylindre de freinage (30), et **en ce que** ledit capteur de pression (36) est intégré dans ledit module régulateur de pression.
